# FASCICULE DE BREVET EUROPEEN

(11) **EP 0 948 303 B1**
(45) Date de publication et mention de la délivrance du brevet: **02.01.2002**
(21) Numéro de dépôt: 98947265.9
(22) Date de dépôt: 20.10.1998
(51) Int. Cl.: A61G 5/02, B60B 27/00

(54) **DISPOSITIF DE BLOCAGE**
FESTSTELLEINRICHTUNG
BLOCKING DEVICE

(30) Priorité: 20.10.1997 CH 243197
(43) Date de publication de la demande: 13.10.1999
(73) Titulaire: Edco-Sapim S.A., 2108 Couvet (CH)
(72) Inventeur: NIEDRIG, Franklin, F., CH-8044 Zurich (CH)
(74) Mandataire: Ganguillet, Cyril
(86) Numéro de dépôt international: CH9800444
(87) Numéro de publication internationale: WO9920218

(56) Documents cités:
- AU-A- 4 765 085
- DE-A- 4 201 745
- FR-A- 2 548 096
- FR-A- 2 588 513
- FR-A- 2 725 128
- US-A- 4 679 862
- US-A- 5 379 866

## Description

La présente invention a pour objet un dispositif de blocage d'une roue d'un véhicule, notamment d'une chaise roulante.

On sait que les véhicules du genre des chaises roulantes comportent souvent deux roues principales disposées à l'extérieur du châssis et dont le moyeu est facilement accessible par la main de l'occupant de la chaise. Dans certains cas, un cercle fixé à la roue autour du moyeu, sur le côté extérieur, permet de mouvoir la chaise sans avoir recours à un mécanisme d'entraînement ou à un moteur. Cependant, il est aussi désirable de pouvoir arrêter le véhicule de manière sûre et, dans ce but, on a déjà proposé (Brevet US 5 379 866) un dispositif de blocage qui est commandé par un levier monté à l'extrémité extérieure du moyeu que définit le préambule de la revendication 1. Ce dispositif connu comporte un mécanisme avec une partie mobile et une partie fixe s'engageant l'une sur l'autre en position bloquée, sous la commande du levier. Toutefois, dans ce dispositif connu, les deux parties du mécanisme sont logées dans le moyeu. Une telle disposition peut paraître relativement compacte, mais elle a pour conséquence qu'il n'est pas possible d'équiper la chaise de roues dont le tourillon de moyeu peut être facilement démonté afin de retirer la roue. Ce dispositif de blocage n'a pas été utilisé car il est peu pratique. On a préféré jusqu'ici un dispositif à levier qui agit sur le pneu. Toutefois, un tel dispositif ne permet pas un blocage sûr puisque, d'une part, il dépend de la pression du pneu et que, d'autre part, il peut glisser sur le pneu.

Le but de la présente invention est donc de proposer un dispositif de blocage qui puisse équiper un véhicule dont les roues sont montées sur des tourillons démontables, sans entraver le démontage, le dispositif étant d'un encombrement réduit et fonctionnant de manière sûre.

Dans ce but, la présente invention concerne un dispositif de blocage d'une roue par rapport à un élément de châssis d'un véhicule, notamment d'une chaise roulante, comportant un tourillon lié au châssis, un moyeu de roue pivotant sur le tourillon par l'intermédiaire de paliers, un levier pivotant, monté à une extrémité du moyeu opposée au châssis, et un mécanisme de blocage qui comporte une partie fixe solidaire de l'élément de châssis et une partie mobile s'engageant sur la partie fixe en position de blocage, commandée par le levier, ce dispositif étant caractérisé en ce que la partie fixe comporte des organes de blocage directement solidaires de l'élément de châssis, disposés autour de l'axe du tourillon, et en ce que la partie mobile comporte des éléments de blocage correspondant aux organes fixes et reliés au levier par des moyens de liaison s'étendant dans le sens de l'axe en dehors des paliers.

Les éléments de blocage de la partie mobile peuvent être situés dans une creusure du moyeu du côté du châssis, ladite partie mobile, qui peut être sollicitée par un ou plusieurs ressorts qui la maintiennent dans une position stable au moins en position de blocage, pouvant comporter en outre deux tiges de liaison qui traversent axialement le moyeu à une distance de l'axe supérieure au diamètre extérieur des paliers et des moyens de support et de pivotement du levier, aux extrémités extérieures des tiges; lesdits ressorts pouvant agir en permanence en direction des organes de blocage fixes et les moyens de support et de pivotement du levier pouvant comporter deux broches de pivotement diamétralement opposées, pour deux branches du levier, ces branches étant pourvues de cames qui s'appuient sur la périphérie du moyeu de manière à commander le déplacement axial de la partie mobile en réponse au pivotement du levier.

Des ressorts peuvent être associés au levier, la liaison entre les cames et la partie mobile du mécanisme étant conformée de manière que le levier pivote de 180 degrés entre la position bloquée et la position libre, ces deux positions étant stabilisées par la force des ressorts ou l'élasticité due à la forme du levier.

Selon un mode d'exécution, les organes de blocage fixes sont formés par une ou plusieurs goupilles, cette ou ces goupilles coopérant avec des forures ou des échancrures de la partie mobile.

Selon un autre mode d'exécution, les organes de blocage fixes sont formés par une ou plusieurs forures ou échancrures ménagées dans une couronne fixée à un montant du châssis coaxialement au tourillon, cette ou ces forures ou échancrures coopérant avec une extrémité d'une ou plusieurs tiges de liaison faisant partie de la partie mobile du mécanisme.

La liaison entre le levier et la partie mobile du mécanisme peut être agencée de manière que le levier possède deux positions d'immobilisation orientées à 90 degrés ou à 180 degrés l'une de l'autre, l'une étant la position de blocage et l'autre la position de libération.

On décrit ci-après, à titre d'exemple, une forme d'exécution et différentes variantes de l'objet de l'invention en se référant au dessin annexé dont :
les figures 1 et 2 sont des vues en coupe du dispositif selon deux plans, respectivement horizontal et vertical, et
la figure 3 est une esquisse en perspective illustrant les composants principaux du dispositif dans une variante de réalisation.

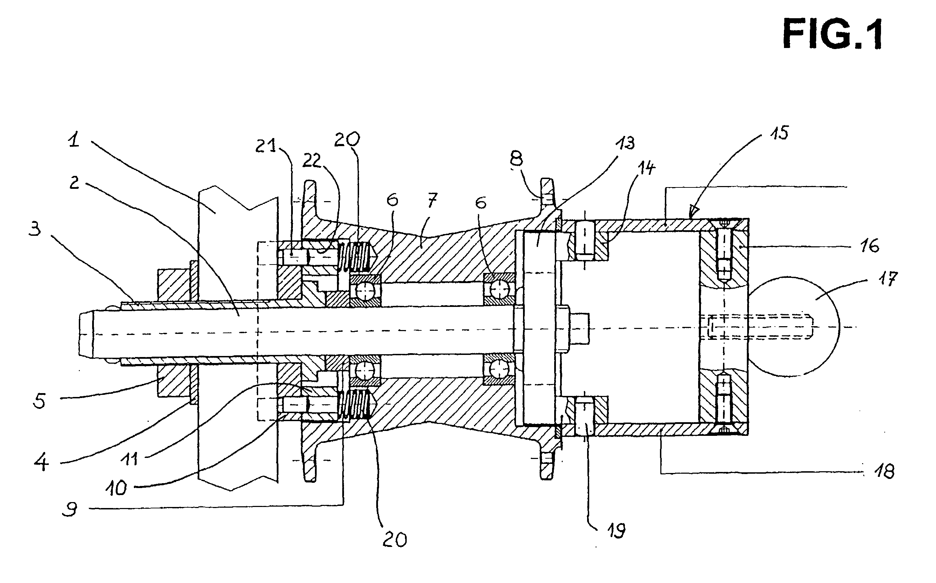

A la fig. 1, le chiffre de référence 1 désigne une barre, de profil rectangulaire, appartenant au châssis d'un véhicule tel qu'une chaise roulante. Un tourillon amovible 2 est engagé sur une douille d'adaptation 3, immobilisée par une rondelle 4 et un écrou 5, dans une forure de la barre 1. Le tourillon 2 est d'un type permettant son démontage rapide exclusivement depuis son extrémité extérieure. Il porte deux paliers à billes 6 dont les bagues extérieures sont prises dans des saignées de la face intérieure d'un moyeu 7 dont les deux brides périphériques d'extrémités 8 présentent des trous pour l'accrochage des rayons de la roue (non représentés).

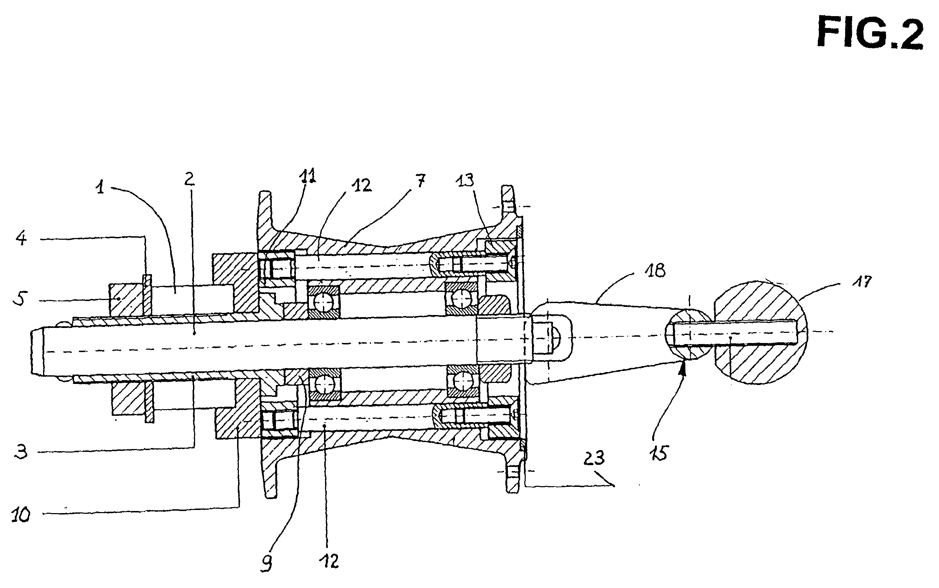

En fixant la douille d'adaptation 3 à la barre 1 du châssis, l'écrou 5 fixe également à cette barre une bague anti-rotation 10 qui comporte une fraisure s'engageant sur la barre 1 (voir aussi fig. 2). La bague 10 appartient à la partie fixe du mécanisme de blocage.

La partie mobile de ce mécanisme est entièrement montée dans le moyeu 7. Elle comprend une armature rigide formée d'une couronne intérieure 11, de deux tiges de liaison 12 (fig. 2) et d'une couronne extérieure 13. Les deux couronnes 11 et 13 sont logées dans des creusures cylindriques aux extrémités du moyeu 7 et les tiges 12 passent dans des forures parallèles à l'axe du moyeu, à une distance de cet axe qui est supérieure au diamètre extérieur des paliers 6. Les creusures du moyeu sont suffisamment profondes pour donner à l'armature 11, 12, 13 le jeu nécessaire au fonctionnement du dispositif.

Enfin un moyen de commande manuel appartient également à la partie mobile du mécanisme. Comme on le voit à la fig. 1, la couronne 13 présente deux bossages 14 diamétralement opposés de manière à supporter un levier de commande 15 formé d'un axe de levier 16 portant une poignée de commande 17, et de deux barres excentriques 18 fixées aux extrémités de l'axe 16. Ces barres pivotent coaxialement sur les bossages 14 par le moyen de broches 19 chassées dans une des pièces et engagées à frottement libre dans l'autre. D'autre part, le contour des barres 18, à leur extrémité côté moyeu, est tel qu'elles jouent le rôle de cames s'appuyant sur une étroite bague de matériau dur 23 fixée sur la face externe du moyeu 7. Le profil des cames est excentrique par rapport à l'axe de pivotement défini par les broches 19. Ce profil est visible à la fig. 2.

Le fonctionnement du mécanisme est assuré par des ressorts, qui, dans la forme d'exécution décrite, sont représentés à la fig. 1. Ils prennent, dans cette exécution, la forme de deux courts ressorts de compression 20 engagés dans des noyures, au fond de la creusure du moyeu 7 contenant la couronne intérieure 11. Ces ressorts, disposés de part et d'autre du tourillon 2, pressent la couronne 11 et, avec elle, toute l'armature 11, 12, 13 en direction de la bague 10. Celle-ci porte une ou plusieurs goupilles saillantes 21 chassées dans des forures alors que la couronne 11 présente un nombre correspondant de forures 22 ajustées au diamètre des goupilles 21. Dans la position représentée aux fig. 1 et 2, le mécanisme est bloqué. Le levier 15 s'étend dans le plan horizontal. La partie des cames 18 qui a le plus petit rayon appuie contre la bague 23 de sorte que l'armature 11, 12, 13 se trouve dans sa position gauche extrême à la fig. 2. Deux trous 22 sont engagés sur les goupilles 21, ce qui verrouille le moyeu par rapport à la bague fixe 10. Pour débloquer la roue, il suffit de tirer le levier 15 vers le haut en le saisissant par la poignée 17. Sa rotation tire l'armature 11, 12, 13 vers la droite contre l'action des ressorts 20 de sorte que la couronne 11 est libérée des goupilles 21. La partie plane haute des cames 18 est pressée contre la bague 23, ce qui assure une position stable du levier 15. Lors du mouvement inverse de ce dernier, la couronne 11 est pressée contre les têtes des goupilles 21 jusqu'à ce que les forures 22 se trouvent dans une position qui permet à l'armature de se déplacer vers la gauche.

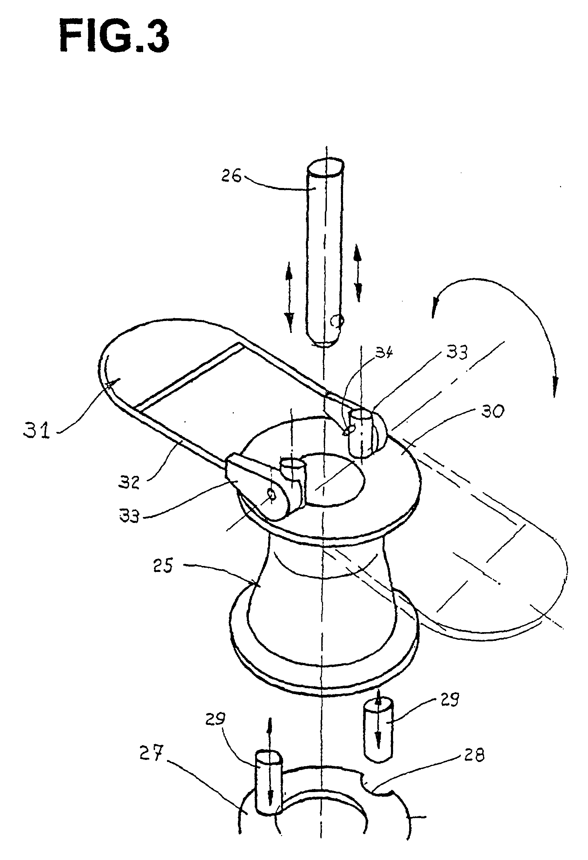

Dans cette forme d'exécution, il serait aussi possible, en variante, de conformer les cames de manière que le mouvement de blocage corresponde à un déplacement angulaire de 180 degrés du levier 15. Toutefois la figure 3 montre une autre variante avec déplacement angulaire de 180 degrés, dans laquelle, en outre, l'armature de la partie mobile est plus simple.

On voit sur cette esquisse le moyeu 25 et le tourillon 26 représenté dans une position dégagée. La partie fixe du mécanisme est représentée par une bague 27 munie de deux échancrures 28. Cette bague est fixée au châssis du véhicule par des moyens non représentés. L'armature mobile est ici formée de deux tiges parallèles 29 reliées, par exemple, par une couronne analogue à la couronne intérieure 11, également logée dans une creusure du moyeu 25. Toutefois, ces tiges traversent la couronne et leurs extrémités constituent les organes de blocage de la partie mobile en s'engageant dans les échancrures 28. En variante, les extrémités des tiges peuvent aussi être noyées dans l'épaisseur de la couronne et cette dernière peut porter une bague ou un disque avec des échancrures à sa périphérie. La partie fixe est alors conformée comme dans la première forme d'exécution, avec des goupilles saillantes coopérant avec les ouvertures ou échancrures de la bague ou disque porté par la couronne mobile. Des ressorts analogues aux ressorts 20 sont prévus entre le moyeu et cette couronne.

A leur extrémité extérieure, les tiges 29 débouchent sur la face antérieure 30 du moyeu.

Comme on le voit à la fig. 3, le levier de commande 31 comporte deux branches parallèles 32 qui sont élastiques et se terminent par les cames à excentrique 33. Celles-ci présentent une gorge verticale dans leur face interne de sorte qu'elles se déplacent latéralement sur les broches de pivotement 34 contre l'élasticité des branches 32 lorsqu'on fait pivoter le levier de la position représentée en traits continus à la position esquissée sur la droite de la figure 3. Par un ajustage convenable de l'élasticité des branches du levier et des surfaces actives des cames 33, le fonctionnement du dispositif est assuré et les deux positions extrêmes du levier sont stables. Le blocage a lieu même si le levier a été rabattu hors d'une position d'enclenchement. On note encore que la course de 180 degrés réduit la force à développer lors de l'opération, ce qui est important dans le cas de voitures de handicapés.

Dans tous les cas, le tourillon amovible 2 ou 26 reste parfaitement accessible depuis le côté extérieur de la roue, ce qui permet un démontage aisé et rapide.

Le dispositif selon l'invention a l'avantage, malgré le mécanisme de blocage, de permettre la mise en place et l'enlèvement rapide de la roue, sans orientation préalable de cette dernière.

## Revendications

1. Dispositif de blocage d'une roue par rapport à un élément (1) de châssis d'un véhicule, notamment d'une chaise roulante, comportant un tourillon (2, 26) lié au châssis, un moyeu (7, 25) de roue pivotant sur le tourillon par l'intermédiaire de paliers (6), un levier pivotant (15), monté à une extrémité du moyeu opposée au châssis, et un mécanisme de blocage qui comporte une partie fixe (3, 5, 10, 27) solidaire de l'élément de châssis et une partie mobile (11, 12, 13, 29) s'engageant sur la partie fixe en position de blocage, commandée par le levier, **caractérisé en ce que** la partie fixe comporte des organes de blocage (10, 27) directement solidaires de l'élément de châssis, disposés autour de l'axe du tourillon (2, 26), et **en ce que** la partie mobile comporte des éléments de blocage (21, 29) correspondant aux organes fixes et reliés au levier par des moyens de liaison (18, 33) s'étendant dans le sens de l'axe en dehors des paliers.

2. Dispositif selon la revendication 1, **caractérisé en ce que** les éléments de blocage (11, 13) de la partie mobile sont situés dans une creusure du moyeu (7) du côté du châssis, ladite partie mobile comportant en outre deux tiges (12) de liaison qui traversent axialement le moyeu à une distance de l'axe supérieure au diamètre extérieur des paliers (6) et des moyens de support et de pivotement (14, 19) du levier, aux extrémités extérieures des tiges.

3. Dispositif selon la revendication 2, **caractérisé en ce que** la partie mobile du mécanisme est sollicitée par un ou plusieurs ressorts (20) qui la maintiennent dans une position stable au moins en position de blocage.

4. Dispositif selon la revendication 3, **caractérisé en ce que** les moyens de support et de pivotement du levier comportent deux broches (19) de pivotement diamétralement opposées, pour deux branches (18) du levier, ces branches étant pourvues de cames qui s'appuient sur la périphérie du moyeu de manière à commander le déplacement axial de la partie mobile en réponse au pivotement du levier.

5. Dispositif selon la revendication 3, **caractérisé en ce que** les ressorts (20) agissent en permanence en direction des organes de blocage fixes.

6. Dispositif selon la revendication 4, **caractérisé en ce que** des ressorts (32) sont associés au levier (31), la liaison entre les cames et la partie mobile du mécanisme étant conformée de manière que le levier pivote de 180 degrés entre la position bloquée et la position libre, ces deux positions étant stabilisées par la force des ressorts ou l'élasticité due à la forme du levier.

7. Dispositif selon la revendication 1, **caractérisé en ce que** les organes de blocage fixes sont formés par une ou plusieurs goupilles (21), cette ou ces goupilles coopérant avec des forures (22) ou des échancrures de la partie mobile.

8. Dispositif selon la revendication 1, **caractérisé en ce que** les organes de blocage fixes sont formés par une ou plusieurs forures (22) ou échancrures (28) ménagées dans une couronne (27) fixée à un montant du châssis coaxialement au tourillon, cette ou ces forures ou échancrures coopérant avec une extrémité d'une ou plusieurs tiges (29) de liaison faisant partie de la partie mobile du mécanisme.

9. Dispositif selon la revendication 1, **caractérisé en ce que** la liaison entre le levier et la partie mobile du mécanisme est agencée de manière que le levier (31) possède deux positions d'immobilisation orientées à 90 degrés ou à 180 degrés l'une de l'autre, l'une étant la position de blocage et l'autre la position de libération.

## Patentansprüche

1. Einrichtung zum Feststellen eines Rades in Bezug auf ein Element (1) eines Fahrgestells eines Fahrzeugs, insbesondere eines Rollstuhls, umfassend einen Achsschenkel (2, 26), der mit dem Fahrgestell verbunden ist, eine Radnabe (7, 25), die sich unter Zwischenschaltung von Lagern (6) um den Achsschenkel dreht, einen Schwenkhebel (15), der an einem Ende der Nabe montiert ist, das dem Fahrgestell entgegengesetzt ist, und einen Feststellmechanismus, umfassend einen fixen Teil (3, 5, 10, 27), der fest mit dem Element des Fahrgestells verbunden ist, und einen beweglichen Teil (11, 12, 13, 29), der in der Feststellposition in den fixen Teil eingreift und durch den Hebel gesteuert wird, **dadurch gekennzeichnet, dass** der fixe Teil Feststellorgane (10, 27) umfasst, die direkt fest mit dem Element des Fahrgestells verbunden sind und um die Achse des Achsschenkels (2, 26) angeordnet sind, und dass der bewegliche Teil Feststellelemente (21, 29) umfasst, die den fixen Organen entsprechen und mit dem Hebel durch Verbindungsmittel (18, 33) verbunden sind, die sich in Achsrichtung außerhalb der Lager erstrecken.

2. Einrichtung nach Anspruch 1, **dadurch gekennzeichnet, dass** die Feststellelemente (11, 13) des beweglichen Teils in einer Einsenkung der Nabe (7) an der Seite des Fahrgestells angeordnet sind, wobei der genannte bewegliche Teil darüber hinaus zwei Verbindungsstangen (12), die die Nabe axial in einer Entfernung von der Achse durchqueren, die größer ist als der äußere Durchmesser der Lager (6), sowie Mittel zum Halten und Schwenken des Hebels (14, 19) an den äußeren Enden der Stangen umfasst.

3. Einrichtung nach Anspruch 2, **dadurch gekennzeichnet, dass** der bewegliche Teil des Mechanismus unter der Wirkung von einer oder mehreren Federn (20) steht, die ihn mindestens in der Feststellposition in einer stabilen Position halten.

4. Einrichtung nach Anspruch 3, **dadurch gekennzeichnet, dass** die Mittel zum Halten und Schwenken des Hebels zwei diametral entgegengesetzte Schwenkzapfen (19) für zwei Schenkel (18) des Hebels umfassen, wobei diese Schenkel mit Nocken versehen sind, die so an den Umfang der Nabe drücken, dass die axiale Bewegung des beweglichen Teils in Antwort auf das Schwenken des Hebels gesteuert wird.

5. Einrichtung nach Anspruch 3, **dadurch gekennzeichnet, dass** die Federn (20) dauernd in Richtung auf die fixen Feststellorgane drücken.

6. Einrichtung nach Anspruch 4, **dadurch gekennzeichnet, dass** Federn (32) mit dem Hebel (31) verbunden sind, wobei die Verbindung zwischen den Nocken und dem beweglichen Teil des Mechanismus so ausgeführt ist, dass der Hebel um 180 Grad zwischen der festgestellten Position und der freien Position schwenkt, wobei diese beiden Positionen durch die Kraft der Federn oder die auf die Form des Hebels zurückzuführende Elastizität stabilisiert werden.

7. Einrichtung nach Anspruch 1, **dadurch gekennzeichnet, dass** die fixen Feststellorgane durch einen oder mehrere Stifte (21) gebildet werden, wobei dieser Stift oder diese Stifte mit Bohrungen (22) oder Ausschnitten im beweglichen Teil zusammenarbeiten.

8. Einrichtung nach Anspruch 1, **dadurch gekennzeichnet, dass** die fixen Feststellorgane durch eine oder mehrere Bohrungen (22) oder Ausschnitte (28) gebildet sind, die in einem Kranz (27) ausgeführt sind, der koaxial zum Achsschenkel an einer Stütze des Fahrgestells befestigt ist, wobei diese Bohrung oder Bohrungen bzw. dieser Ausschnitt oder diese Ausschnitte mit einem Ende einer oder mehrerer Verbindungsstangen (29) zusammenarbeiten, die zum beweglichen Teil des Mechanismus gehören.

9. Einrichtung nach Anspruch 1, **dadurch gekennzeichnet, dass** die Verbindung zwischen dem Hebel und dem beweglichen Teil des Mechanismus so ausgeführt ist, dass der Hebel (31) zwei Immobilisierungspositionen aufweist, die in einer Ausrichtung von 90 Grad oder 180 Grad zueinander angeordnet sind, wobei die eine die Feststellposition und die andere die Freigabeposition ist.

## Claims

1. Wheel blocking device in relation to a vehicle frame element (1), in particular of a wheelchair, comprising a journal (2, 26) linked to the frame, a wheel hub (7, 25) pivoting on the journal by means of bearings (6), a pivoting lever (15), mounted at the end of the hub opposite the frame, and a blocking mechanism which comprises a fixed part (3, 5, 10, 27) that is integral with the frame element and a moving part (11, 12, 13, 29) which engages in the fixed part in a blocking position, controlled by the lever, **characterised in that** the fixed part has blocking components (10, 27) directly integral with the frame element, arranged around the shaft of the journal (2, 26), and **in that** this moving part comprises blocking elements (21, 29) corresponding with the fixed components and joined to the lever by means of links (18, 33) that extend along the shaft outside the bearings.

2. Device as per claim 1, **characterised in that** said blocking elements (11, 13) of the moving part are situated in a recess in the hub (7) on the frame side, said moving part also comprising two link rods (12) that cross the hub axially at a distance from the shaft greater than the external diameter of the bearings (6) and a means of supporting and pivoting (14, 19) the lever, at the outer ends of the rods.

3. Device as per claim 2, **characterised in that** the moving part of the mechanism is acted on by one or more springs (20) which hold it in a stable position at least in the blocking position.

4. Device as per claim 3, **characterised in that** the means of supporting and pivoting the lever comprises two diametrically opposite pivoting spindles (19), for two arms (18) of the lever, these arms having cams which bear on the circumference of the hub in such a way as to control the axial displacement of the moving part in response to the pivoting of the lever.

5. Device as per claim 3, **characterised in that** said springs (20) act permanently in the direction of the fixed blocking elements.

6. Device as per claim 4, **characterised in that** springs (32) are combined with the lever (31), the geometry of the link between the cams and the moving part of the mechanism being designed such that the lever pivots 180 degrees between the blocked position and the released position, these two positions being stabilised by the force of the springs or the elasticity due to the shape of the lever.

7. Device as per claim 1, **characterised in that** the fixed blocking components are formed by one or more pins (21), this pin or these pins working with holes (22) or notches in the moving part.

8. Device as per claim 1, **characterised in that** the fixed blocking components are formed by one or more holes (22) or notches (28) made in a ring (27) fixed to an upright of the frame coaxially to the journal, this (or these) hole(s) or notches(s) working with one end of one or more link rods (29) forming part of the moving part of the mechanism.

9. Device as per claim 1, **characterised in that** the link between the lever and the moving part of the mechanism is arranged such that the lever (31) has two static positions orientated 90 degrees or 180 degrees in relation to each other, one being the locking position and the other the release position.
